# FASCICULE DE BREVET EUROPEEN

(11) **EP 0 964 107 B1**
(45) Date de publication et mention de la délivrance du brevet: **11.05.2005**
(21) Numéro de dépôt: 98440124.0
(22) Date de dépôt: 09.06.1998
(51) Int. Cl.: E04B 1/58, A47B 47/00

(54) **Noeud d'assemblage**
Verbindungsknoten
Connector node

(43) Date de publication de la demande: 15.12.1999
(73) Titulaire: HUSSON COLLECTIVITES, S.A., F-68650 Lapoutroie (FR)
(72) Inventeur: Husson, Daniel, 68240 Kaysersberg (FR); Pontius, Alain, 68630 Bennwihr (FR)
(74) Mandataire: Nuss, Pierre

(56) Documents cités:
- DE-U- 29 616 635
- FR-A- 2 294 352
- FR-A- 2 694 583
- GB-A- 1 265 889
- US-A- 4 864 795

## Description

La présente invention concerne le domaine des structures tubulaires, en particulier des constructions tubulaires, des équipements de sport et de loisirs, ainsi que des échafaudages et des matériels d'exposition et a pour objet un noeud d'assemblage pour de telles structures.

Actuellement, l'assemblage d'éléments tubulaires au niveau des noeuds est généralement effectué au moyen de colliers en deux parties, enserrant les tubes au niveau du noeud par pincement au moyen de boulons traversant lesdits colliers.

Il peut également être prévu un montage direct entre deux tubes au niveau d'un noeud, au moyen d'un boulon ou encore d'éléments d'assemblage à accrochage avec verrouillage de l'assemblage au moyen de vis de pression.

Par ailleurs, on connaît, dans le domaine des matériels d'exposition, notamment des étagères, des dispositifs d'assemblage sous forme de boules présentant un certain nombre de trous borgnes pouvant coopérer chacun avec un tube ou analogue, lesdites boules étant simplement emboîtées sur l'extrémité des tubes.

Ces différents dispositifs d'assemblage de noeuds connus présentent, cependant, un certain nombre d'inconvénients, à savoir, dans le cas de colliers, de ne permettre que la réalisation de noeuds présentant un nombre réduit de tubes et, dans le cas d'utilisation de boules ou analogues, de ne pas permettre un blocage des extrémités de tubes dans lesdites boules. En outre, la prévision de colliers ne permet pas une obtention d'une esthétique compatible, par exemple avec la réalisation de certaines structures, en particulier dans le domaine des loisirs ou de l'équipement de magasins.

Il est également connu, par FR-A-2 694 583, un noeud d'assemblage pour structures tubulaires qui se présente sous forme de deux demi-coquilles assemblées entre elles par boulonnage et munies d'évidements correspondants et/ou de perçages pour l'insertion et le blocage d'extrémités d'éléments tubulaires. Ce noeud d'assemblage permet de réaliser un assemblage, d'une part, des extrémités de plusieurs éléments tubulaires au moyen des demi-coquilles, les moyens de serrage des coquilles entre-elles servant simultanément au blocage desdites extrémités au niveau des évidements correspondants et, d'autre part, le montage de l'extrémité d'autres éléments tubulaires perpendiculairement au plan des premiers avec maintenu en position par des moyens d'assujettissement spécifiques.

Cependant, ce mode de réalisation ne permet pas l'obtention d'un maintien sans jeu des éléments tubulaires montés perpendiculairement ou suivant un autre plan oblique par rapport au plan de jonction des demi-coquilles, de sorte qu'il subsiste une possibilité de rotation ou de pivotement par rapport à l'axe longitudinal desdits éléments tubulaires.

Par ailleurs, DE-U-296 16 635 décrit un noeud d'assemblage prévoyant un montage d'élément tubulaire avec serrage par pincement dans des demi-coquilles. Ce document ne prévoit aucun moyen indépendant de maintien et de serrage sans jeu de l'extrémité d'élément tubulaire dans le noeud, coopérant directement avec ladite extrémité d'élément tubulaire.

La présente invention a pour but de pallier ces inconvénients en proposant un noeud d'assemblage d'éléments tubulaires permettant un blocage sans jeu des extrémités des éléments situées hors du plan de joint des demi-coquilles constitutives dudit noeud d'assemblage.

Elle a, en effet, pour objet un noeud d'assemblage pour structures tubulaires, qui se présente sous forme de deux demi-coquilles assemblées entre elles par boulonnage et munies d'évidements correspondants et/ou de perçages pour l'insertion et le blocage d'extrémités d'éléments tubulaires, dont le noeud est pourvu, pour chaque extrémité d'élément tubulaire à monter dans au moins un des perçages d'une des demi-coquilles, hors des plans de joint, d'au moins un moyen indépendant de maintien et de serrage sans jeu de ladite extrémité, caractérisé en ce que l'au moins un moyen indépendant traverse ladite extrémité d'élément tubulaire.

L'invention sera mieux comprise, grâce à la description ci-après, qui se rapporte à un mode de réalisation préféré, donné à titre d'exemple non limitatif, et explique avec référence aux dessins schématiques annexés, dans lesquels :
la figure 1 est une vue en perspective éclatée d'un noeud conforme à l'invention ;
la figure 2 est une vue perspective du noeud en position de service, et
la figure 3 est une vue en élévation latérale, partiellement en coupe, d'une demi-coquille.

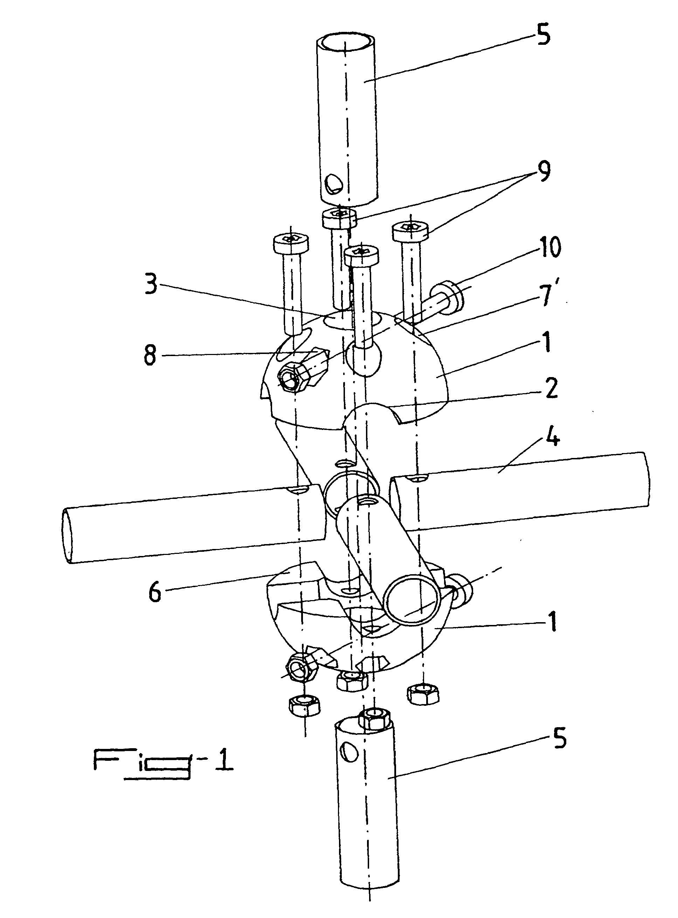

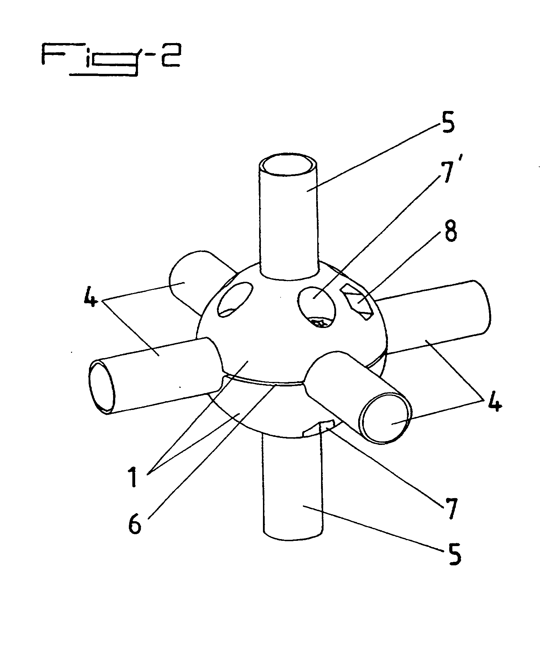

Les figures 1 et 2 des dessins annexés représentent, à titre d'exemple, un noeud d'assemblage pour structures tubulaires, qui se présente sous forme de deux demi-coquilles 1 assemblées entre elles par boulonnage et munies d'évidements 2 et de perçages 3 pour l'insertion et le blocage d'extrémités d'éléments tubulaires 4 et 5. A cet effet, les demi-coquilles 1 sont pourvues, chacune sur son plan de joint 6, d'évidements 2 disposés symétriquement par rapport auxdits plans de joint 6 ainsi que de perçages 3 s'étendant suivant un ou plusieurs plans différents des plans de joint 6 (figures 1 à 3). Ces demi-coquilles 1 sont avantageusement pourvues, perpendiculairement à l'axe des évidements 2 et aux plans de joint 6 et perpendiculairement à l'axe des perçages 3, de trous de passage respectifs 7, 7' et 8, 8' pour des moyens de serrage correspondants 9 et 10, qui coopèrent avec des perçages transversaux prévus dans les extrémités correspondantes des éléments tubulaires 4 et 5 à monter et à bloquer dans les demi-coquilles 1. Ces perçages présentent un diamètre au moins égal à celui des axes des moyens de serrage correspondants 9 et 10.

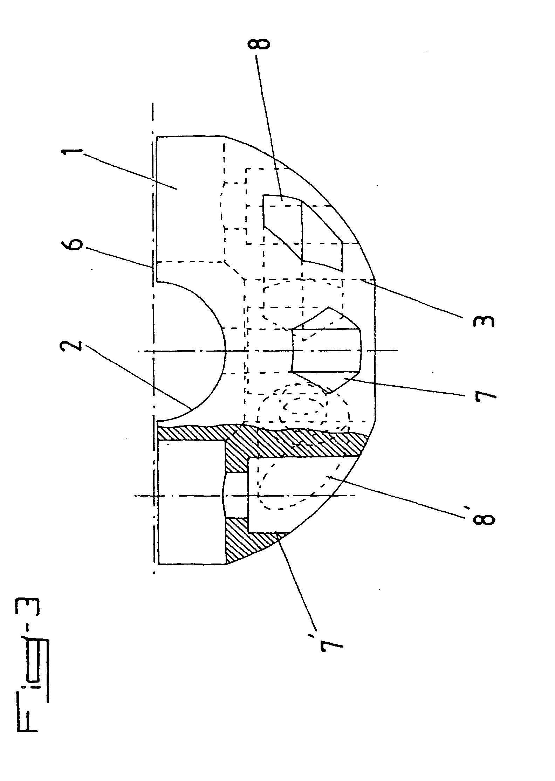

Conformément à l'invention et comme le montrent plus particulièrement les figures 1 et 3 des dessins annexés, le noeud d'assemblage est pourvu, pour chaque extrémité d'élément tubulaire 5 à monter dans au moins un perçage 3 d'une demi-coquille 1, hors des plans de joint 6, d'au moins un moyen indépendant 10 de maintien et de serrage sans jeu de ladite extrémité.

Les éléments des moyens de serrage 9 sont logés dans des trous de passage respectifs 7 et 7' de forme correspondante. Une série de ces trous, 7, permet, de manière connue, une coopération de forme avec l'un des éléments des moyens de serrage, à savoir, par exemple, un écrou hexagonal, l'autre élément, à savoir, par exemple, une vis à tête cylindrique à six-pans creux, étant logé librement dans un trou de passage épaulé 7' correspondant.

Selon une caractéristique de l'invention, le moyen indépendant 10 de maintien et de serrage sans jeu est avantageusement constitué sous forme d'un boulon, dont l'écrou, de préférence hexagonal, est guidé par coopération de forme dans un trou de passage 8 de la demi-coquille 1 s'étendant à partir de l'extérieur de celle-ci jusqu'au perçage 3 de réception de l'extrémité de l'élément tubulaire 5 correspondant, la vis, sous forme d'une vis à tête cylindrique à six-pans creux, étant logée librement dans un trou de passage épaulé 8' opposé au trou 8 de guidage de l'écrou.

Ainsi, lors du serrage d'un moyen indépendant 10 de maintien et de serrage sans jeu par actionnement de sa vis traversant l'extrémité de l'élément tubulaire 5, cette dernière attire l'écrou correspondant vers la face correspondante de l'élément 5 et le serre contre cette dernière. Du fait de l'appui de la tête de vis sur l'épaulement prévu dans le trou de passage 8', le serrage de l'écrou contre l'élément 5 a pour effet de supprimer intégralement le jeu de montage pouvant exister dans le perçage 3 et, ainsi, tout risque de pivotement ou de rotation dudit élément 5 par rapport à son axe longitudinal.

Ainsi, il est possible de réaliser un assemblage des extrémités de plusieurs éléments tubulaires au moyen des demi-coquilles 1, les moyens de serrage des demi-coquilles 1 entre-elles servant simultanément au blocage desdites extrémités au niveau des évidements 2, tandis que l'extrémité d'éléments tubulaires pénétrant dans des perçages 3 est maintenue en position dans ces derniers par le moyen indépendant 10 de maintien et de serrage sans jeu traversant le perçage correspondant d'extrémité desdits éléments tubulaires 5 et dont les éléments constitutifs sont logés dans les trous 8 et 8'.

Sur les dessins annexés, les demi-coquilles 1 présentent avantageusement une forme hémisphérique. Ainsi, il est possible de réaliser un noeud d'assemblage présentant, d'une part, des possibilités de fixation d'éléments tubulaires suivant le plan de joint et, d'autre part, des possibilités de fixation de tels éléments tubulaires suivant un ou plusieurs plans sécants, les moyens d'assemblage et de blocage étant entièrement noyés dans les demi-coquilles. Cependant, des demi-coquilles de forme différente sont également envisageables.

Grâce à l'invention, il est possible de réaliser un noeud d'assemblage permettant un grand nombre de variétés d'assemblages et dans lequel chaque élément tubulaire coopérant avec le noeud est solidarisé avec celui-ci sans aucun jeu. En outre, le noeud d'assemblage conforme à l'invention présente une esthétique très nettement améliorée par rapport aux dispositifs existant actuellement, de sorte qu'il peut être utilisé sans habillage complémentaire, directement dans la réalisation d'équipements de loisirs ou autres, ou encore comme éléments d'assemblage de structures tubulaires utilisées dans l'agencement de magasins, en particulier d'étagères.

Un tel noeud d'assemblage peut être réalisé en toute matière rigide compatible avec la structure à exécuter.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Noeud d'assemblage pour structures tubulaires se présentant sous forme de deux demi-coquilles (1) assemblées entre elles par boulonnage et munies d'évidements correspondants (2) et de perçages (3) pour l'insertion et le blocage d'extrémités d'éléments tubulaires (4 et 5), dont le noeud est pourvu, pour chaque extrémité d'élément tubulaire (5) à monter dans au moins un des perçages (3) d'une des demi-coquilles (1), hors des plans de joint (6), d'au moins un moyen indépendant (10) de maintien et de serrage sans jeu de ladite extrémité, **caractérisé en ce que** l'au moins un moyen indépendant (10) traverse ladite extrémité d'élément tubulaire (5).

2. Noeud d'assemblage, suivant la revendication 1, **caractérisé en ce que** le moyen indépendant (10) de maintien et de serrage sans jeu est constitué sous forme d'un boulon, dont l'écrou, de préférence hexagonal, est serré contre l'élément tubulaire (5) et est guidé par coopération de forme dans un trou de passage (8) de la demi-coquille (1) s'étendant à partir de l'extérieur de celle-ci jusqu'au perçage (3) de réception de l'extrémité de l'élément tubulaire (5) correspondant, la vis, sous forme d'une vis à tête cylindrique à six-pans creux, étant logée librement dans un trou de passage épaulé (8') opposé au trou (8) de guidage de l'écrou.

## Patentansprüche

1. Knotenpunkt für rohrförmige Strukturen, der in der Form von zwei Halbschalen (1) ausgebildet ist, die untereinander durch eine Bolzenverbindung verbunden und mit entsprechenden Ausnehmungen (2) und Bohrungen (3) zum Einsetzen und Blockieren der Enden von rohrförmigen Elementen (4, 5) versehen sind, wobei der Knoten für jedes Ende eines rohrförmigen Elements (5), welches in wenigstens einer der Bohrungen (3) von einer der Halbschalen (1) zu montieren ist, beabstandet von den Teilungsebenen (6) mit wenigstens einem unabhängigen Mittel (10) versehen ist, um das Ende ohne Spiel zu halten und festzuspannen, **dadurch gekennzeichnet, daß** das wenigstens eine unabhängige Mittel (10) das Ende des rohrförmigen Elements (5) durchquert.

2. Knotenpunkt nach Anspruch 1, **dadurch gekennzeichnet, daß** das unabhängige Mittel (10) zum Halten und Festspannen ohne Spiel in der Form eines Bolzens ausgebildet ist, dessen Schraubenmutter, welche vorzugsweise sechseckig ausgebildet ist, gegen das rohrförmige Element (5) gespannt ist und durch eine Zusammenwirkung nach Art eines Formschlusses in einer Durchgangsöffnung (8) der Halbschale (1), die sich von der Außenseite von dieser bis zu der entsprechenden Bohrung (3) zur Aufnahme des Endes des rohrförmigen Elements (5) erstreckt, geführt ist, wobei die Schraube in der Form einer Schraube mit einem zylindrischen Kopf mit einem Innensechskant frei in einer mit einem Absatz versehenen Durchgangsöffnung (8'), welche der Öffnung (8) zur Führung der Schraubenmutter gegenüberliegt, frei angeordnet ist.

## Claims

1. Assembly node for tubular structures in the form of two half-shells (1) joined together by bolting and provided with corresponding recesses (2) and perforations (3) for inserting and locking tubular element ends (4 and 5), the node of which is provided, for each tubular element end (5) to be mounted in at least one of the perforations (3) of one of the half-shells (1), outside the joint planes (6), with at least one independent means (10) for holding and gripping said end without play, **characterised in that** the at least one independent means (10) crosses said tubular element end (5).

2. Assembly node according to claim 1, **characterised in that** the independent means (10) for holding and gripping the end without play is in the form of a bolt, of which the nut, which is preferably hexagonal, is gripped against the tubular element (5) and is guided in a shape-mating manner into a hole (8) for the passage of the half-shell (1) extending from the exterior of said half-shell to the perforation (3) for receiving the end of the corresponding tubular element (5), the screw, in the form of a cylindrical head screw having six inner flat sides, being disposed freely in a shouldered passage hole (8') remote from the hole (8) for guiding the nut.
